# EUROPEAN PATENT SPECIFICATION

(11) **EP 1 451 916 B1**
(45) Date of publication and mention of the grant of the patent: **28.04.2010**
(21) Application number: 02801983.4
(22) Date of filing: 22.10.2002
(51) Int. Cl.: H02J 7/00, H02J 7/35, G01R 21/133

(54) **METHOD AND DEVICE FOR GUARANTEEING THE SUPPLY OF ENERGY IN AUTONOMOUS INSTALLATIONS**
VERFAHREN UND EINRICHTUNG ZUM GARANTIEREN DER ENERGIEVERSORGUNG IN AUTONOMEN INSTALLATIONEN
PROCEDE ET DISPOSITIF SERVANT A GARANTIR L'ALIMENTATION EN ENERGIE D'INSTALLATIONS AUTONOMES

(30) Priority: 23.10.2001 ES 200102336
(43) Date of publication of application: 01.09.2004
(73) Proprietor: Trama Tecnoambiental, S.L., 08026 Barcelona (ES)
(72) Inventor: VALLVE MIGUEL, Xavier, E-08026 Barcelona (ES); MERTENS, Jens, E-08003 Barcelona (ES); GRAU TURIGAS, Josep, E-08017 Barcelona (ES)
(74) Representative: Ponti Sales, Adelaida
(86) International application number: PCT/IB2002/004393
(87) International publication number: WO 2003/036776

(56) References cited:
- ES-A- 2 147 135

## Description

This invention relates to a method and a device for guaranteeing the supply of energy in autonomous installations for rural electrification, which permits the user to be offered a guarantee of service, together with some simple diagnostic tools and total control over the use of the battery.

### BACKGROUND OF THE INVENTION

Electrification applications, such as autonomous photovoltaic or wind-powered electrification, have a large market for application in rural areas without an electricity network as a substitute for the fuel of a generator set or wax candles for lighting and for disposable batteries for powering communications appliances such as radio receivers or television sets.

A typical household photovoltaic solar installation consists in one or more photovoltaic panels, a battery and a regulating device, whose function is that of controlling the process of charging of the battery and disconnecting consumption if the state of charge of the battery is insufficient. The penetration of these installations is limited, however, owing partly to the short useful life of the batteries necessary for storing the energy generated.

The problem with these installations is the lack of information to users regarding the energy they have available for consumption. The users thus consume energy until they discharge the battery down to the cut-off threshold predetermined by the regulating device. Moreover, as the autonomy of the battery is typically of several days, the time needed for total recharging of a depleted battery is also several days. Users cannot wait for the battery to be totally charged, and so begin to consume energy from it when the regulating device so permits, which means that the battery never reaches full charge. This leads to the battery being kept at an intermediate state of charge for lengthy periods, which leads to deterioration of the battery for reasons such as sulphation.

Some of the existing patents provide solutions to these problems, based on complex calculations of the state of charge of the battery in order to determine the energy available in the batteries. Other patents go further and try to adapt the consumption of energy to the state of charge of the battery.

One example of utilisation of an algorithm for assessing the energy available in the battery is disclosed in patent US-5.699.050. This patent relates to a measurer of current of the capacity of a battery, which includes a controller, a display unit of the absolute discharge capacity of the battery, and a light for displaying a condition of the battery, under which the absolute discharge capacity of the battery reaches a maximum of absolute charge capacity. Said capacities are calculated on the basis of the charge or discharge current and the temperature of the battery.

Basically, patent US-5.699.050 uses a bi-directional measurer of battery current and carries out a calculation of the state of charge of the battery on the basis of a balance of accumulated current. This balance has the disadvantage that errors of measurement also accumulate in the accumulated currents, so that the result of the balance is determined not by the accumulated current but by the errors of measurement.

Another example of algorithm for assessing the available energy of the battery is described in patent US-5.151.865, which discloses a method and an appliance for determining the energy value of an electrochemical battery by measuring the voltage at the battery terminal, which recognises at least one reference value obtained from the resulting current which flows in the battery during a specific unit of time and in a range of specific operating voltages, and/or on the basis of battery reaction values, such as internal resistance values, the interior temperature and the density of the acid. Depending on the voltage at the terminal defined in the range of operating voltages and on a content value of energy defined within a range of energy content, this reference value represents a function value. The measured voltage at the terminal related to the function value corresponds to a specific energy content value in the range of energy contents.

This patent US-5.151.865 is mainly based on an algorithm, which determines the energy, contained in a battery. For this purpose it has to carry out a large number of calculations, in addition to needing the specific curves of the battery, which is being used.

One clear example of adaptation of the consumption of energy to the state of charge of the battery is shown in patent US-6.081.104. This patent discloses a method and an appliance for providing energy to a lighting system. Said method includes a source of energy which supplies energy to a battery and to a load. The battery can be charged by the energy source and is used to supply energy to the load when the source of energy is incapable of providing it directly. The installation manipulates the charge optimally, so that the storage of the battery remains near complete charge, even if the consumption functions over a maximum number of hours at night. The main objective of the installation is to prevent early failure of the battery.

In this way, management of consumption in order to protect the battery is based on calculation of the state of charge thereof, which involves the major disadvantage that a very sophisticated algorithm is necessary in order to take account of parameters such as self-discharge of the battery or losses by gasification.

Another example of algorithm for assessing the available energy of the battery is described in patent FR-2.689.333, which discloses a method for guaranteeing the supply of energy in autonomous installations, through a regulator of energy with a battery disconnection system controlled by credit. The device is based in a complex calculation of the state of the charge of de battery in order to determine the energy available in the batteries for the users, with a bi-directional measurer of the battery current. The fact that it considers four parameters as voltage (Ub), temperature (Tb), charge current (Ic) and user current (Iu), it makes that the device described is based on the use of algorithms of considerable complexity, with more complex electronic circuits. The application in photovoltaic installations has the disadvantage that the disconnection of the battery is carried out when there is a low state of charge of the same, which leads to low-charge cycling and may cause sulphation of the battery.

There isn't absolutely any control in order to increase and maximise the life cycle of the battery, because the disconnection of the battery is executed only when the credit control has been exhausted. The quantity of energy is charged in the battery externally, independently of the internal parameters.

The device cuts off the passage of current when the assigned credit has been reached or exceeded.

All the patents cited have a number of disadvantages which will be described below.

It is clear that all the inventions described are based on the use of algorithms of considerable complexity, whether due to the high number of parameters to be processed or the large number of calculations which have to be carried out in order to obtain the state of charge of the battery. This shows itself in complex electronic circuits, such as microcontrollers with high calculation capacity, which leads to high economic costs.

There are also regulating devices which do not assess the state of battery charge. An insufficient state of charge to supply energy to the consumption points is detected simply by a measurement of the voltage of the battery. With this type of devices users never know the energy available in the battery, and so cannot determine the amount of energy they can continue to consume. This induces a state of uncertainty in users, which means a poor energy consumption policy.

There are also some patents on energy regulators, which cause disconnection of the battery in the event of excessive discharge thereof, and some of these are described below.

Patent US-5.703.468 relates to an appliance and a method for controlling the electrical charge for photovoltaic energy-conversion installations.

Patent US-5.635.816 relates to a method and an appliance for controlling the charging current of a battery.

All the patents cited above have the disadvantage that disconnection of the battery is carried out when there is a low state of charge of same, which leads to low-charge cycling and gives rise to sulphation of the battery.

Patent P9801455, from the same holder as this application, describes a system for the distribution of electrical energy in a network, thereby achieving a suitable distribution of energy between the individual units of consumption, but which is not designed for utilization with a single user.

### DESCRIPTION OF THE INVENTION

The method and the device of the invention manages to resolve the aforesaid disadvantages, while presenting other advantages which will be described.

The invention is defined by a method and a device with the technical features of independent claims 1 and 6 respectively.

Preferably, the method of this invention also includes the stage of adding a percentage to said predetermined value of energy available to the user in the event that, upon updating said meter, the value of energy available to the user exceeds 0.

Whether the battery has charged completely or partially will be determined by measuring its voltage. Advantageously the method of this invention also includes the stage of determining the predetermined value of energy available to the user on the basis of the voltage values of the accumulator element over a predetermined period of time. If said values are low, this indicates that the user is consuming so much energy that the battery cannot be charged completely. In such a situation, the predetermined value of energy available to the user is reduced. If said values are high, this indicates that the consumption of energy permits the battery to be charged completely. In this situation the predetermined said value of energy available to the user is not reduced.

If wished, the speed of discounting of the meter can be altered in situations of surplus or shortage of energy from the generator.

Advantageously, said current measurer can cut off the passage of current in the event that a value exceeding a predetermined value is detected.

All the components which form the device are mounted on a board in order to make up a single element.

The device of this invention can also include a display screen on which the value of energy available to the user is shown.

Preferably, the processing unit includes a non-volatile memory which stores the value of energy available to the user.

Advantageously, said display screen can include an indicator of poor functioning of the accumulator element.

Said dispensing element can include a switch (relay or solid-state switch), a direct current-direct current converter or an inverter. The dispensing element is controlled by the processing unit.

In order to prevent fraudulent connection of consumption devices directly to the accumulator, the device can be mounted and connected thereto, and the terminals of said accumulator element are covered with an insulating material, so that the user cannot gain access to those terminals, the device of this invention thus forming a physical unit with said accumulator element. Unlike in all the documents cited, disconnection of the supply of energy is carried out independently of the state of the accumulator element at that time. Only in exceptional cases, in which the voltage of the accumulator element is very low, will emergency disconnection be carried out.

Moreover, the device of this invention does not aim to find out the state of charge of said accumulator element, as has been usual so far, but only to determine the energy consumed by the user.

The key characteristic of this invention is that it provides a device and a method which permits management of the appliances connected, so that if the user consumes too much energy the supply is disconnected in order to protect the accumulator element against the damage, which could be caused by a low state of charge.

### BRIEF DESCRIPTION OF THE DRAWINGS

For a better understanding of all that has been outlined, a drawing is attached which shows, schematically and solely by way of non-restrictive example, a practical case of embodiment.

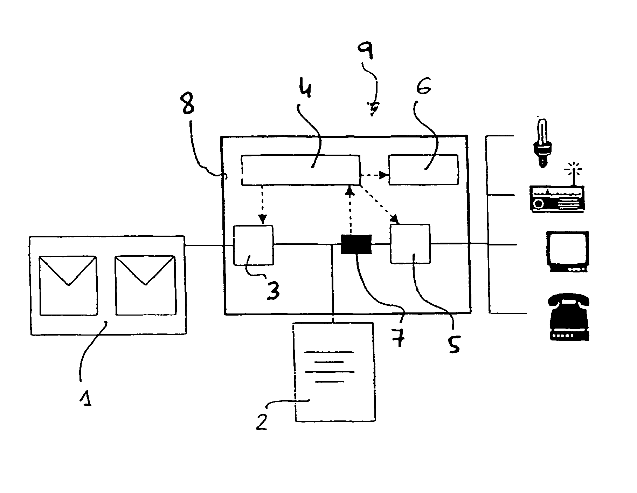

The single figure is a block diagram of the device of this invention.

### DESCRIPTION OF A PREFERRED EMBODIMENT

Firstly, it should be stated that the following description of the invention is made applied to the field of solar energy. The device and the method of this invention could nevertheless be applied to any suitable field of obtaining energy. For example, the energy generator could also be a fuel cell, instead of a photovoltaic panel.

As the single figure shows, the device for guaranteeing the supply of energy in autonomous installations is connected to a photovoltaic panel 1 and to an electrochemical accumulator or battery 2 to store the energy obtained from the photovoltaic panel 1.

The device of this invention, identified generally by means of number reference 9, includes a regulator 3 of the charge of the battery, mounted between the photovoltaic panel 1 and the battery 2;
a processing unit 4, provided with a meter, which controls the entire electronic part of the device, especially the energy supplied to the user;
a dispensing device 5 controlled by the processing unit 4;
a current measurer 7 which, through the processing unit 4, permits the energy consumed to be determined; and
a display screen 6 to show the energy available to the user, independently of the state of charge of the battery 2.

All these components are preferably mounted on a board 8 to form a single element or device 9.

Said dispensing device 5 can include a switch (relay or solid-state switch), a direct current-direct current converter or an inverter. The dispensing device 5 is controlled by the processing unit 4.

The functions of the device 9 of this invention are to obtain the maximum energy from the photovoltaic panels 1, to achieve optimum charge of the battery 2, to protect the battery 2 from excessive discharges, to deliver the energy to the user under acceptable conditions, to provide the user with indications for optimum use of the autonomous installation and to validate the quality of the service provided to the user.

The processing unit 4 includes a non-volatile memory, which stores the value of the energy consumed.

To avoid the fraudulent connection of consumption devices directly to the battery 2, the device 9 is mounted and connected to the battery, and the terminals of said battery are covered with an insulating material, in such a way that the user cannot gain access to its terminals, with the device 9 of this invention forming a physical unit with said battery 2.

The method of this invention for guaranteeing the supply of energy is as follows.

The user has the right to use an energy value available to the user over a specific period of time, calculated in function of the climatic parameters of the zone.

The meter provided in the processing unit 4 periodically updates said predetermined value of energy available to the user for consumption over a predetermined period of time, such as one day.

As the user consumes energy, the single current measurer 7 measures the current provided to the user, which is discounted from the meter by the processing unit 4. If the meter goes down to 0 at some time during the day, the supply of energy is disconnected by deactivation of the dispensing device 5.

If at the end of said predetermined period the value of the meter is higher than 0, an additional percentage is added to next value of energy available to the user for a predetermined period of time. Incentives for energy saving are thus provided, as the more energy that is stored the more energy can be expended in case of need. For example, if at the end of said period of time the user has only used 50% of said value of energy available to the user, then a bonus of 10% of said value will be granted, so that the following day there will be a value of energy available to the user of 110% of said value of energy available to the user.

The supply of energy can be disconnected due to the predetermined value of energy available to the user having been used up, as indicated above, or because the voltage of the battery is lower than a predetermined security value.

If desired, an instantaneous bonus can be granted for the consumption. If this is the case, the bonus would be activated whenever the regulator 3 limits the input of energy from the photovoltaic panels 1. All consumption made at that moment would not be discounted completely from the value of energy available to the user and, therefore, would be partly rewarded.

If the voltage of the battery 2 is too low and no energy is entering, a restriction mode can be activated such that a greater consumption than the real consumption would be discounted from the value of energy available to the user.

Whether the battery 2 has been charged completely or partially will be determined by measurement of its voltage over a predetermined period of time. The value of energy available to the user can be adapted to transitory periods of bad weather, during which the energy generated by the photovoltaic panels 1 would not be sufficient to charge the battery completely. If said values of energy are low, this indicates that the user is consuming so much energy that the battery cannot be charged completely. In this situation the predetermined value of energy available to the user is reduced. If said values are high, this indicates that the consumption of energy does permit the battery to be charged completely. In this situation the predetermined value of energy available to the user is not reduced.

If, for example, it is determined that the percentage of days on which the charging cycle has been completed over the last 30 days is lower than 20%, the value of energy available to the user for the following day would be 30% lower than the predetermined assigned value.

As indicated above, the device of this invention also includes a display screen 6 from which all the necessary information can be obtained. The user will thus be able to know at any time the amount of energy available for that day. He will also be able to know if the energy supply is under the bonus mode, that is, if the regulator is limiting the input of energy. The user will thus know if it is possible to consume without that being deducted from the total value available in the meter.

The user will also be able to find out from the display screen 6 if there is input of energy from the photovoltaic panels 1 or if there is an additional extra of energy available to the user owing to his not having used up his energy value on previous days, as indicated above.

Furthermore, in the event of disconnection the user will also be able to find out the reason, whether due to excess current, low voltage of the battery 2 or using up of the value of energy available to the user.

The user will also be able to find out if the installation is not working properly, as the screen 6 will show if the voltage of the battery 6 is too low for a predetermined period of time or if the battery 2 is damaged. This last indicator is activated in the event that the charging of the battery 2 has been completed and the meter still shows energy available, but the supply is disconnected due to low battery voltage during the same day.

Despite the fact that reference has been made to a specific embodiment of the invention, it will be obvious to a person skilled in the art that the device and the method described allow of numerous variations and modifications, and that all the details mentioned can be replaced by others that are technically equivalent without departing from the scope of protection defined in the attached claims.

## Claims

1. Method for guaranteeing the supply of energy in autonomous installations, which uses a device which includes an element (3) for regulating the charge accumulated in an energy accumulating element (2) and generated by an external source in a generating element (1), a central processing unit (4), provided with a meter, which manages the functioning of the device, comprising:
a) updating of said meter to a predetermined value of energy available to the user for consumption over a predetermined period of time, the updating of said meter being carried out independently of the state of charge of the energy accumulating element (2) at that time
b) supply of energy through activation of a dispensing element (5) provided on said device by discounting from the said predetermined energy value available to the user in said meter, the supply of energy being limited on the basis of the energy comsumption determined by a single measuring element of unidirectional current (7)
c) disconnection of the supply of energy by means of disconnection of the dispensing element (5) in the event that said value of energy available to the user reaches the value 0 in said meter;
wherein, through the processing unit (4), permits the voltage to be registered over a predetermined period of time, and the energy consumed to be managed by the cyclically replay of the steps a), b) and c),
**characterised in that** it further includes the step of determining the predetermined value of energy available to the user on the basis of the voltage values of the accumulator element over a predetermined period of time by reducing the predetermined value of energy available to the user if said values are low, and by not reducing the predetermined value of energy available to the user if said values are high.

2. Method as claimed in Claim, 1, **characterised in that** the dispensing element (5) of the energy stored in the accumulator element (2), managed by the central processing unit (4), provides at most a predetermined quantity of energy for consumption over said predetermined period of time independently of the state of charge of the accumulator element (2).

3. Method as claimed in claim 1, **characterised in that** the charge control will be determined by measuring the voltage of the accumulator element (2).

4. Method as claimed in claim 1, **characterised in that** said current measurer (7) cuts off the passage of current in the event that a value exceeding a current predetermined value is detected.

5. Method as claimed in claim 4, **characterised in that** only in the case that the accumulator element (2) voltage is low, the current measurer (7) cuts off the passage of current as a emergency disconnection.

6. Device for guaranteeing the supply of energy in autonomous installations according to the method as claimed in Claim 1, which includes an element (3) for regulating the charge accumulated in an energy accumulating element (2) and generated from an external source in a generating element (1), a central processing unit (4), provided with a meter, which manages the operation of the device; **characterised in that** includes a single current measuring element of output unidirectional current (7) which, through the central processing unit (4), determines the energy consumed.

7. Device as claimed in Claim 6, **characterised in that** the processing unit (4) includes a non-volatile memory which stores the value of energy available to the user.

8. Device as claimed in Claim 6, **characterised in that** said display screen (6) includes an indicator of poor functioning of the accumulator element.

9. Device as claimed in Claim 6, **characterised in that** said dispensing element (5) includes a switch , a direct current-direct current converter or an inverter.

10. Device as claimed in Claim 6, **characterised in that** all the components which form the device are mounted on a board (8).

11. Device as claimed in Claim 6, **characterised in that** it forms a physical unit with said accumulator element (2).

12. Device as claimed in Claim 11, **characterised in that** the terminals of said accumulator element (2) are covered with an insulating materials to prevent the user gaining access to the terminals.

## Patentansprüche

1. Verfahren zum Garantieren der Energieversorgung in autonomen Installationen, das eine Vorrichtung verwendet, die ein Element (3) zum Einstellen der Ladung, die in einem Energiespeicherelement (2) gespeichert ist und durch eine äußere Quelle in einem Erzeugungselement (1) erzeugt wurde, eine zentrale Prozesseinheit (4) umfasst, die mit einem Messgerät versehen ist, das die Betriebsweise der Vorrichtung steuert, das aufweist:
a) Aktualisieren des Messgeräts auf einen vorbestimmten Energiewert, der dem Nutzer zum Verbrauch über einen vorbestimmten Zeitraum zur Verfügung steht, wobei das Aktualisieren des Messgeräts unabhängig von dem Ladungszustand des Energiespeicherelements (2) zu dieser Zeit ausgeführt wird,
b) Zuführen von Energie durch Aktivieren eines Spendeelements (5), das an der Vorrichtung vorgesehen ist, durch Abziehen von dem vorbestimmten Energiewert, der dem Nutzer in dem Messgerät zur Verfügung steht, wobei die Energieversorgung auf der Basis des Energieverbrauchs, bestimmt durch ein einzelnes Messelement von unidirektionalem Strom (7) begrenzt wird,
c) Trennung der Energieversorgung mittels Trennen des Ausgabeelements (5) in dem Fall, dass der Wert, der dem Nutzer verfügbaren Energie den Wert 0 in dem Messgerät erreicht,
wobei durch die Prozesseinheit (4) ermöglicht wird, die Spannung über einen vorbestimmten Zeitraum zu speichern, und der Energieverbrauch durch zyklische Wiederholung der Schritte a), b) und c) gesteuert wird,
**dadurch gekennzeichnet, dass** es weiterhin den Schritt des Bestimmens des vorbestimmten, dem Nutzer zur Verfügung stehenden Energiewerts auf der Basis der Spannungswerte des Speicherelements über einen vorbestimmten Zeitraum umfasst, durch Reduzierung des vorbestimmten, dem Nutzer zur Verfügung stehenden Energiewerts, wenn diese Werte gering sind, und durch Nicht-Reduzierung des vorbestimmten Energiewerts, der dem Nutzer zur Verfügung steht, wenn diese Werte hoch sind.

2. Verfahren nach Anspruch 1, **dadurch gekennzeichnet, dass** das Energiespendeelement (5), das in dem Speicherelement (2) gespeichert ist, gesteuert durch die zentrale Verarbeitungseinheit (4), meistens eine vorbestimmte Menge von Energie zum Verbrauch über den vorbestimmten Zeitraum schafft, unabhängig von dem Ladezustand des Speicherelements (2).

3. Verfahren nach Anspruch 1, **dadurch gekennzeichnet, dass** die Ladekontrolle durch Messen der Spannung des Speicherelements (2) bestimmt wird.

4. Verfahren nach Anspruch 1, **dadurch gekennzeichnet, dass** der Strommesser (7) den Stromzufluss abschaltet, in dem Fall, dass ein Wert erfasst wird, der einen vorbestimmten Stromwert übersteigt.

5. Verfahren nach Anspruch 4, **dadurch gekennzeichnet, dass** nur in dem Fall, dass die Spannung des Speicherelements (2) gering ist, der Strommesser (7) den Stromfluss als eine Notabschaltung abschaltet.

6. Vorrichtung zum Garantieren der Energieversorgung in autonomen Installationen, nach dem Verfahren gemäß Anspruch 1, die ein Element (3), zum Einstellen der Ladung, die in einem Ladungsspeicherelement (2) gespeichert ist, und von einer externen Quelle in einem Erzeugungselement (1) erzeugt wurde, eine zentrale Prozesseinheit (4) umfasst, die mit einem Messgerät versehen ist, das die Betriebsweise der Vorrichtung steuert, **dadurch gekennzeichnet, dass** sie ein einzelnes Strommesselement (7) von unidirektionalem Ausgangsstrom (7) umfasst, dass durch die zentrale Verarbeitungseinheit (4) die verbrauchte Energie bestimmt.

7. Vorrichtung nach Anspruch 6, **dadurch gekennzeichnet, dass** die Prozesseinheit (4) einen nicht-flüchtigen Speicher umfasst, der den, dem Nutzer zur Verfügung stehenden Energiewert speichert.

8. Vorrichtung nach Anspruch 6, **dadurch gekennzeichnet, dass** der Anzeigeschirm (6) einen Indikator der Geringfunktion des Speicherelements umfasst.

9. Vorrichtung nach Anspruch 6, **dadurch gekennzeichnet, dass** das Ausgabeelement (5) einen Schalter, einen Direktstrom-Direktstromwandler oder einen Stromrichter umfasst.

10. Vorrichtung nach Anspruch 6, **dadurch gekennzeichnet, dass** alle die Komponenten, die die Vorrichtung bilden, auf einer Halterplatte (8) angeordnet sind.

11. Vorrichtung nach Anspruch 6, **dadurch gekennzeichnet, dass** sie eine physikalische Einheit mit dem Speicherelement (2) bildet.

12. Vorrichtung nach Anspruch 11, **dadurch gekennzeichnet, dass** die Anschlüsse des Speicherelements (2) mit einem Isoliermaterial überzogen sind, um zu verhindern, dass der Nutzer Zugang zu den Anschlüssen bekommt.

## Revendications

1. Procédé servant à garantir la fourniture d'énergie à des installations autonomes, qui utilise un dispositif comprenant un élément (3) pour réguler la charge accumulée dans un élément d'accumulation d'énergie (2) et générée par une source externe dans un élément de génération (1), une unité de traitement centrale (4), fournie avec un élément de mesure, qui gère le fonctionnement du dispositif, comprenant les étapes consistant à :
a) mettre à jour ledit élément de mesure à une valeur d'énergie prédéterminée disponible à la consommation pour l'utilisateur pendant une durée prédéterminée, la mise à jour dudit élément de mesure étant effectuée indépendamment de l'état de charge de l'élément d'accumulation d'énergie (2) à cet instant ;
b) fournir de l'énergie grâce à une activation d'un élément de distribution (5) appartenant audit dispositif par réduction à partir de ladite valeur d'énergie prédéterminée disponible pour l'utilisateur dans ledit élément de mesure, la fourniture d'énergie étant limitée sur la base de la consommation en énergie déterminée par un élément de mesure unique d'un courant unidirectionnel (7) ;
c) déconnecter la fourniture d'énergie grâce à la déconnexion de l'élément de distribution (5) dans le cas où ladite valeur d'énergie disponible pour l'utilisateur atteint la valeur 0 dans ledit élément de mesure ;
dans lequel l'unité de traitement (4) permet d'enregistrer la tension sur une période de temps prédéterminée et de gérer l'énergie consommée par la répétition de façon cyclique des étapes a), b) et c),
**caractérisé en ce qu'**il comprend en outre l'étape de détermination de la valeur prédéterminée de l'énergie disponible pour l'utilisateur sur la base des valeurs de tension de l'élément accumulateur sur une période de temps prédéterminée en réduisant la valeur prédéterminée de l'énergie disponible pour l'utilisateur si lesdites valeurs sont faibles et en ne réduisant pas la valeur prédéterminée de l'énergie disponible pour l'utilisateur si lesdites valeurs sont élevées.

2. Procédé selon la revendication 1, **caractérisé en ce que** l'élément de distribution (5) de l'énergie stockée dans l'élément accumulateur (2), géré par l'unité de traitement centrale (4), fournit au maximum une quantité prédéterminée d'énergie pour la consommation sur ladite période de temps prédéterminée indépendamment de l'état de charge de l'élément formant accumulateur (2).

3. Procédé selon la revendication 1, **caractérisé en ce que** la commande de charge sera déterminée par la mesure de la tension de l'élément formant accumulateur (2).

4. Procédé selon la revendication 1, **caractérisé en ce que** ledit mesureur de courant (7) interrompt le passage du courant dans le cas où une valeur excédant une valeur prédéterminée de courant est détectée.

5. Procédé selon la revendication 4, **caractérisé en ce que** dans le seul cas où la tension de l'élément formant accumulateur (2) est faible, le mesureur de courant (7) interrompt le passage de courant sous la forme d'une déconnexion d'urgence.

6. Dispositif pour garantir la fourniture d'énergie à des installations autonomes conformément au procédé selon la revendication 1, qui comprend un élément (3) pour réguler la charge accumulée dans un élément d'accumulation d'énergie (2) et générée à partir d'une source externe dans un élément de génération (1), une unité de traitement centrale (4), fournie avec un élément de mesure, qui gère le fonctionnement du dispositif ; **caractérisé en ce qu'**il comprend un élément unique de mesure de courant du courant unidirectionnel de sortie (7), qui, grâce à l'unité de traitement centrale (4), détermine l'énergie consommée.

7. Dispositif selon la revendication 6, **caractérisé en ce que** l'unité de traitement (4) comprend une mémoire non volatile qui stocke la valeur en énergie disponible pour l'utilisateur.

8. Dispositif selon la revendication 6, **caractérisé en ce que** ledit écran d'affichage (6) comprend un indicateur de mauvais fonctionnement de l'élément formant accumulateur.

9. Dispositif selon la revendication 6, **caractérisé en ce que** ledit élément de distribution (5) comprend un commutateur, un convertisseur de courant continu-courant continu ou un inverseur.

10. Dispositif selon la revendication 6, **caractérisé en ce que** tous les composants qui forment le dispositif sont montés sur une carte (8).

11. Dispositif selon la revendication 6, **caractérisé en ce qu'**il forme une unité physique avec ledit élément formant accumulateur (2).

12. Dispositif selon la revendication 11, **caractérisé en ce que** les terminaux dudit élément accumulateur (2) sont recouverts avec des matériaux isolants afin d'empêcher l'utilisateur d'avoir accès aux terminaux.
